# EUROPEAN PATENT APPLICATION

(11) **EP 2 241 960 A1**
(43) Date of publication of application: **20.10.2010**
(21) Application number: 10159403.4
(22) Date of filing: 08.04.2010
(51) Int. Cl.: G06F 3/044, G06F 3/041

(54) **Electronic device and touch screen display with force sensor**

(30) Priority: 16.04.2009 US 169941 P
(71) Applicant: RESEARCH IN MOTION LIMITED, Waterloo, Ontario N2L 3W8 (CA)
(72) Inventor: Purdy, Michael, Waterloo Ontario N2L 3W8 (CA); Lowles, Robert James, Waterloo Ontario N2L 3W8 (CA); Hosseinpor, Hassan Daniel, Waterloo Ontario N2L 3W8 (CA); Singh, Amit Pal, Waterloo Ontario N2L 5Z5 (CA)
(74) Representative: Fennell, Gareth Charles

(57) **Abstract**

A touch screen display includes a display, touch-sensitive overlay disposed on the display, a controller operably coupled to the capacitive touch-sensitive overlay, and a capacitive force sensor. The capacitive force sensor includes first and second electrodes separated by a dielectric. The first electrode is coupled the controller.

## Description

### FIELD OF TECHNOLOGY

The present disclosure relates to an electronic device including a force sensor for sensing an applied force on a touch screen display of the electronic device.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Devices such as PDAs or smart telephones are generally intended for handheld use and ease of portability. Smaller devices are generally desirable for portability. Touch screen displays constructed of a display, such as a liquid crystal display, with a touch-sensitive overlay are useful on such handheld devices as these handheld devices are small and are therefore limited in space available for user input and output devices. Further, the screen content on the touch screen devices may be modified depending on the functions and operations being performed. Touch screen devices that provide tactile feedback are particularly advantageous for providing positive feedback upon selection of a feature on the touch screen.

### BRIEF DESCRIPTION OF THE DRAWINGS

Embodiments of the present disclosure will now be described, by way of example only, with reference to the attached figures, wherein:

FIG. 1 is a simplified block diagram of components including internal components of a portable electronic device according an aspect of an embodiment in accordance with the disclosure;

FIG. 2 is a front view of a portable electronic device in accordance with the disclosure;

FIG. 3 is a cross-section of the portable electronic device through line 210 of FIG. 2 in accordance with the disclosure;

FIG. 4 is a cross-sectional side view of the touch screen display of the portable electronic device through line 210 of FIG. 2 in accordance with the disclosure;

FIG. 5 illustrates a conductive layer disposed on a capacitive touch-sensitive overlay in accordance with the disclosure.

### DETAILED DESCRIPTION

For simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

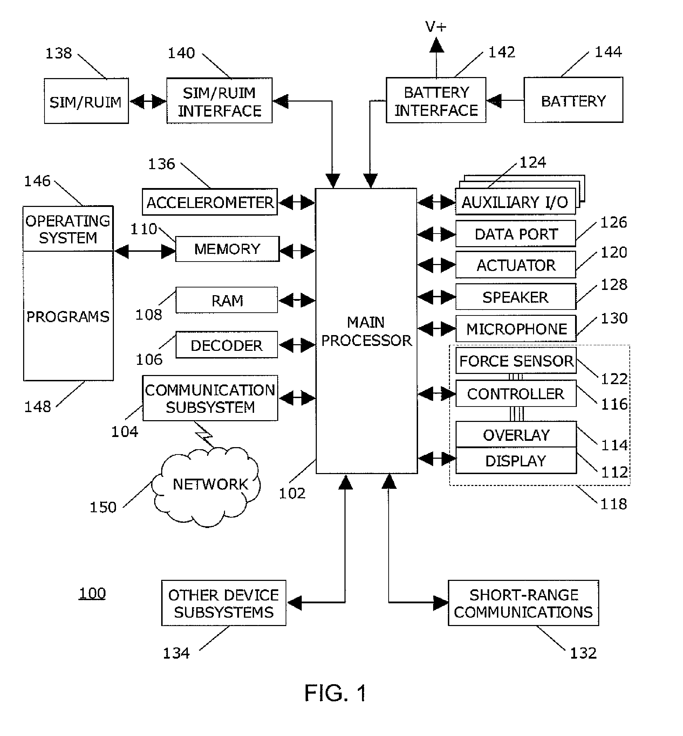

A block diagram of an example of an embodiment of a portable electronic device 100 is shown in FIG. 1. The portable electronic device 100 includes a number of components such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. The portable electronic device 100 is a battery-powered device and includes a battery interface 142 for receiving one or more rechargeable batteries 144.

The processor 102 also interacts with additional subsystems such as a display 112 with a touch-sensitive overlay 114 operably coupled or connected to an electronic controller 116. Components of the display 112 and the touch-sensitive overlay 114 comprise a capacitive force sensor 122 operably coupled or connected to the electronic controller 116. The display 112, touch-sensitive overlay 114, electronic controller and the capacitive force sensor 122 comprise a touch-sensitive display 118 (also referred to in the art as a touch screen display). The processor 102 also interacts with further subsystems such as a Random Access Memory (RAM) 108, memory 110, an actuator 120, an auxiliary input/output (I/O) subsystem 124, a data port 126, a speaker 128, a microphone 130, short-range communications 132 and other device subsystems 134. The processor 102 interacts with the touch-sensitive overlay 114 via the electronic controller 116. The processor and the capacitive force sensor 122 interact via the controller 116. Information, such as text, characters, symbols, images, and other items that may be displayed on a portable electronic device, is displayed on the touch-sensitive display 118 via the processor 102. The processor 102 may also interact with an accelerometer 136 as shown in FIG. 1. The accelerometer 43 may include a cantilever beam with a proof mass and suitable deflection sensing circuitry. The accelerometer 43 may be utilized for detecting direction of gravitational forces or gravity-induced reaction forces.

To identify a subscriber for network access according to the present embodiment, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into memory 110.

The portable electronic device 100 also includes an operating system 146 and software components 148 that are executed by the processor 102 and are typically stored in a persistent, updatable store such as the memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 is substantially similar except that the received signals are output to the speaker 128 and signals for transmission are generated by the microphone 130.

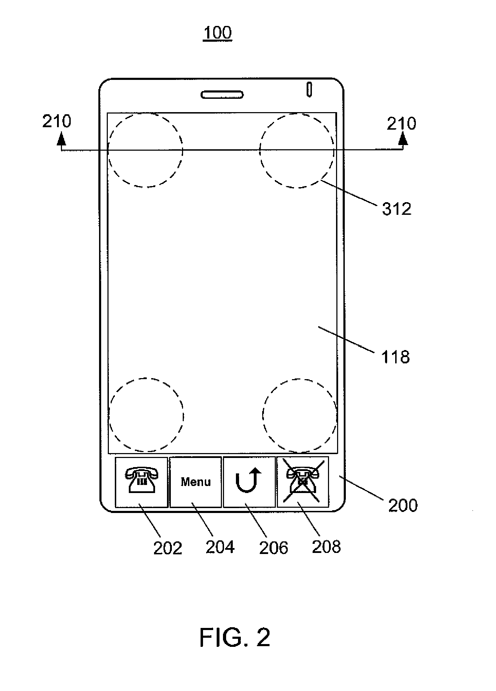

A front view of a portable electronic device 100 is shown in FIG. 2. The portable electronic device 100 includes a housing 200 that houses internal components, including internal components shown in FIG. 1, and frames the touch screen display 118 such that an outer surface of the touch screen display 118 is exposed for user-interaction when the portable electronic device 100 is in use. The housing 200 may be comprised of one or more components. A graphical user interface, as known in the art, renders, on the touch screen display 118, any suitable number of user-selectable features, for example, in the form of virtual buttons that represent, for example, applications, options, or keys of a keyboard for user entry of data during operation of the portable electronic device 100.

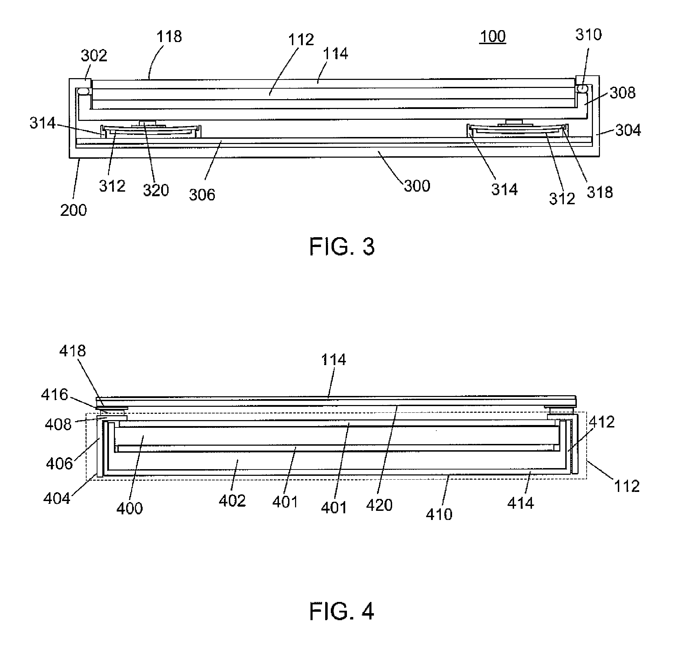

The touch-sensitive overlay 114 is a capacitive touch-sensitive overlay. The touch-sensitive overlay 114 is an assembly of a number of layers in a stack and is advantageously fixed to the display 112 as further described below with reference to FIG. 4. The layers of the touch-sensitive overlay 114 include, for example, a substrate fixed to the LCD display 112 by a suitable adhesive, a ground shield layer, a barrier layer, a pair of capacitive touch sensor layers separated by a substrate or other barrier layer, and a cover layer fixed to a second capacitive touch sensor layer by a suitable adhesive. The capacitive touch sensor layers may be any suitable material such as patterned indium tin oxide (ITO).

Both the X and Y (e.g., horizontal and vertical with respect to a user's view of the display 118) location of a touch event on the touch screen display may be determined. The X location may be determined by a signal generated as a result of capacitive coupling with one of the touch sensor layers, and the Y location may be determined by a signal generated as a result of capacitive coupling with the other of the touch sensor layers. Each of the touch-sensor layers provides a signal to the controller 116 as a result of capacitive coupling with a suitable object, such as a finger of a user or a conductive stylus, resulting in a change in the electric field of each of the touch sensor layers. The signals represent the respective X and Y touch location values. Other attributes of the user's touch on the touch screen display 118 may also be determined. For example, the size and the shape of the touch on the touch screen display 118 may be determined in addition to the location (X and Y values) based on the signals received at the controller 116 from the touch sensor layers.

A user's touch on the touch screen display 118 is established by determining the X and Y touch location and user-selected input is determined based on the X and Y touch location and the application executed by the processor 102. Thus, a feature such as a virtual button displayed on the touch screen display 118 may be selected by matching the feature to the X and Y location of a touch event on the touch screen display 118. Thus, a feature selected by the user is determined based on the X and Y touch location and the application.

The portable electronic device 100 may also include physical buttons. In the present example, the portable electronic device 100 includes four physical buttons 202, 204, 206, 208 in the housing 200 for user-selection for performing functions or operations. Buttons for performing functions on the portable electronic device 100 may also be virtual features rendered on the touch screen display 118.

The housing 200 is suitable for housing the internal components shown in FIG. 1. As best shown in FIG. 3, the housing 200 in the present example includes a back 300, a frame 302, which frames the touch screen display 118, and sidewalls 304 that extend between and generally perpendicular to the back 300 and the frame 302. A base 306 is spaced from and is generally parallel to the back 300. The base 306 may be any suitable base such as a printed circuit board or flex circuit board supported by a stiff support between the base 306 and the back 300. The back 300 advantageously includes a plate (not shown) that is releasably attached for insertion and removal of, for example, the battery 144 and the SIM/RUIM card 138. The back 300, the sidewalls 304 and the frame 302 may be injection molded, for example, and may be separate pieces or one or more integrated pieces. In the example of the portable electronic device 100 shown in the figures, the frame 302 is generally rectangular with rounded corners, although other shapes are possible.

The display 112 and the touch-sensitive overlay 114 are supported on a support tray 308 of suitable material, such as magnesium, for providing mechanical support to the display 112 and the touch-sensitive overlay 114. A compliant gasket 310 is located around the perimeter of the frame 302, between an upper portion of the support tray 308 and the frame 302 to protect the components housed in the housing 200 from moisture, shock absorption, vibration damping and fatigue. A suitable material for the compliant gasket 310 includes, for example, a cellular urethane foam for providing shock absorption, vibration damping, and suitable fatigue life. The touch screen display 118 is moveable within the housing 200 as the touch screen display 118 may be moved away from the base 306, thereby compressing the compliant gasket 310. Further, the touch screen display 118 may be moved toward the base 306, thereby applying a force to piezo actuators 312 referred to below. FIG. 3 and FIG. 4 are not drawn to scale for the purpose of clarity of illustration.

In the example shown in FIG. 3, the actuator 120 comprises four piezo actuators 312, with each piezo actuator 312 supported on a respective support ring 314 in or near a respective corner of the touch screen display 118. Each support ring 314 extends from the base 306 toward the touch screen display 118 and supports the respective piezo actuator 312 while permitting flexing of the piezo actuator 312. The support rings 314 may be part of the base 306 or may be supported on the base 306. The base 306 may be a printed circuit board. The opposing side of the base 306 provides mechanical support and electrical connection for other components (not shown) of the portable electronic device 100. Each piezo actuator 312 is shown advantageously located between the base 306 and the support tray 308. Each piezo actuator 312 includes a piezoelectric device, such as a piezoelectric ceramic disk, adhered to a substrate, such as a metal substrate. The piezoelectric device is supported such that the contraction of the piezo actuators applies a force against the touch screen display 118. The support ring 314 is sized such that the edge of the substrate 318 contacts the support ring 314 to support the piezo actuator 312 and facilitate flexing of the piezo actuator 312. An element 320, that is advantageously at least partially flexible and comprises, for example, hard rubber, may be located between the piezo actuator 312 and the support tray 308. The element 306 does not substantially dampen the force applied to or on the touch-sensitive display 118. In the portable electronic device 100, each piezo actuator 312 is located between the base 306 and the support tray 308 and force is applied on each piezo actuator 312 via the touch screen display 118, in the direction of the base 306, causing bending of the piezo actuator 312. Absent an external force applied to the touch screen display 118, and absent a charge/voltage at the piezo actuator 312, the piezo actuator 312 may be slightly bent due to a mechanical preload.

Charging of the piezo actuators 312 causes a force to be applied the touch screen display 118 in a direction away from the base 306. When an external force is imparted on the touch screen display 118, the charge/voltage at the piezo actuator 312 ramps up over a period of time, resulting in a force on the touch screen display 118 that opposes the external applied force. The charge/voltage on the piezo actuators 312 may be adjusted to control the force applied by the piezo actuators 312 on the support tray 308 and the resulting movement of the touch screen display 118. The charge/voltage may be adjusted by varying the applied voltage or current. For example, a current may be applied to increase the charge/voltage at the piezo actuators 312, thereby causing the piezoelectric device and the substrate to bend. The charge/voltage results in a force that opposes the external applied force applied to the touch screen display 118. When the charge/voltage reaches a predetermined maximum, the charge/voltage may advantageously be removed over a relatively short period of time, as compared to the period of time for ramp up, to provide tactile feedback to the user. The charge/voltage at the piezo actuator 312 may be removed, for example, by a controlled discharge current that causes the piezoelectric device and the substrate and decreasing the force on the touch screen display 118 applied by the piezo actuators 312.

A cross-section of the touch screen display 118 of the portable electronic device 100 is shown in FIG. 4. The display 112 comprises a stack of layers including a liquid crystal display glass 400, disposed between polarizer layers 409 , and a backlight unit 402. A lower bezel 410 includes sides 412 that extend around the ends of the stack, and a bottom 414 that extends along an underside of the stack, generally parallel with the liquid crystal display glass 400 and near the underside of the backlight unit 402. An upper bezel 404 has sides 406 that extend around the sides 412 of the lower bezel 410 and a top 408 that frames the liquid crystal display glass 400. The lower bezel 410 and the upper bezel 404 provide protection for the stack and may advantageously be comprised of metal or metal-plating. The terms "upper," "lower," "top," and "bottom" are utilized for the purpose of providing a reference to the drawing and have no further restrictive meaning otherwise.

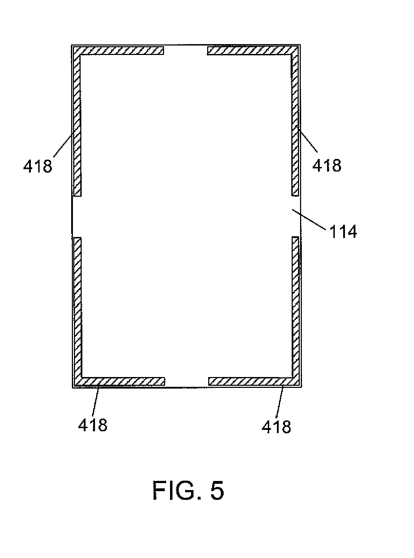

A conductive material 418, such as, indium tin oxide (ITO), silver, or other conductive materials suitable for this application, is disposed on an undersurface of the substrate 420 of the touch-sensitive overlay 114, as shown in FIG. 5. The conductive layer 418 may be advantageously deposited on the substrate 420, such as through vapor deposition and/or other known methods, or may be applied or attached by other known methods. The conductive material 418 includes four conductors 420. Each conductor 420 is separated and electrically isolated from each of the other conductors 420 and is located in or near a corner of the touch-sensitive overlay 114.

The touch-sensitive overlay 114 is adhered to the display 112 by a dielectric adhesive 416 between the conductive layer 418 and the top 408 of the upper bezel 404. Suitable dielectric adhesives include, for example, 57115W available from Nitto Denko Corporation, G9751 available from Sony Chemical and Information Device Corporation, and Daitac® 8625HPW available from Dainippon Ink & Chemicals, Inc. (DIC) Corporation. The dielectric adhesive 416 extends around the periphery on an underside of the touch-sensitive overlay 114.

The lower bezel 410 is electrically connected to ground and to the upper bezel 404, which, by contact with the lower bezel 410, is thereby grounded. Each of the conductors 420 is separately connected to the controller 116. The top 408 of the upper bezel 404 and the conductors 420 are separated by the dielectric adhesive 416. Each conductor 420 functions as a sense electrode for one capacitive force sensor 122. In the example shown in FIG. 5, four conductors 420 are shown, one for each of four capacitive force sensors 122. Capacitance may be measured between each of the conductors 420 on the touch-sensitive overlay 114 and the top 408 of the upper bezel 404. When a change in distance between any of the conductors 420 and the top 408 of the upper bezel 404 occurs, a corresponding change in the capacitance between the two electrodes arises as the electrodes move closer together. An applied force on the touch-sensitive overlay 114 may therefore be detected as a result of a change in the distance between one or more of the conductors 420 and the top 408 of the upper bezel 404. The capacitive force sensors 122 and the processor 22 interact via the controller 116.

A force applied to the touch-sensitive overlay 114, for example, by a user pressing down on the touch-sensitive overlay 114, results in a force applied at the force sensors 122 as the force sensors 122 are compressed between the touch-sensitive overlay 114 and the stack layers of the display 112. The force at each of the four force sensors 122 may differ depending on the location of the external applied force on the touch screen display 118. For example, a force applied near a first corner of the touch screen display 118 results in a higher force measurement at the force sensor 122 nearest the first corner than the force measurement from the force sensors 122 at the other corners of the touch screen display 118.

The portable electronic device 100 is calibrated to determine, from signals from the force sensors 122, a value indicative of an applied force on the touch-sensitive overlay 114 of the touch screen display 118. The location of application of external force on the touch-sensitive overlay 114 is determined based on the relative force measurements determined from the changes in distance between each respective conductor 420 of the conductive layer 418 and the lower bezel 410.

Determination of a touch on the touch-sensitive overlay 114 is synchronized with the sensing of an applied force using the single controller 116. The touch-sensitive overlay 114 is scanned at a regular rate for detection of a touch event. Sensing of an applied force is carried out at the same rate, thereby synchronizing the determination of the touch and the sensing of the applied force.

When a touch is detected on the touch-sensitive overlay 114, a value indicative of the applied force may be determined. If the value indicative of the applied force on the touch screen display 118 is determined to exceed a predetermined threshold, a function associated with the touch location is carried out. For example, the force sensors may be utilized for selection of features. A feature may be selected when the value indicative of the applied force meets or exceeds a threshold force or when the distance between the electrodes reaches a predetermined distance, for example, a minimum distance between the electrodes. Further, tactile feedback may be provided by the removal of the force opposing the external force, e.g., by adjusting the charge/voltage at the piezo actuators 312, resulting in reduction in force that is felt by the user, for example, in the form of reduced opposing force or movement of the touch screen display 118. The mechanical work performed by the piezo actuators 312 may be controlled to provide generally consistent force and/or movement of the touch screen display 118 in response to detection of an applied force on the touch screen display 118. Fluctuations in mechanical work performed, for example, as a result of temperature variation, may be reduced by adjusting the voltage/current to control the charge/voltage. If the predetermined threshold force is not exceeded, the function is not carried out and tactile feedback is not provided. Force sensors that determine the value of an externally applied force to a touch screen display are useful for distinguishing between selection of a user selectable feature on the display and, for example, an inadvertent touch.

Other embodiments may include any suitable number of conductors and the shape of these conductors may vary.

A touch screen display includes a display, a touch-sensitive overlay disposed on the display, a controller operably coupled to the capacitive touch-sensitive overlay, and a capacitive force sensor. The capacitive force sensor includes first and second electrodes separated by a dielectric. The first electrode is electrically coupled or connected the controller.

The second electrode may be grounded. The second electrode may comprise a bezel arranged to protect the display. The dielectric may comprise an adhesive between the capacitive touch-sensitive overlay and the display. The first electrode may comprises a conductive layer between the adhesive and the touch-sensitive overlay. The first electrode may comprise a conductive layer deposited on the touch-sensitive overlay. The first electrode may comprise a plurality of electrically isolated conductors, wherein each of the conductors is electrically coupled to the controller. The first electrode may comprise four electrically isolated conductors, each of the conductors disposed near a respective corner of the capacitive touch-sensitive overlay. The controller is operably coupled to the touch-sensitive overlay to detect a touch event on the touch-sensitive display.

A portable electronic device includes a housing and a touch screen display that includes a display, a touch-sensitive overlay disposed on the display, a controller operably coupled to the capacitive touch-sensitive overlay, and a capacitive force sensor. The capacitive force sensor includes first and second electrodes separated by a dielectric. The first electrode is electrically coupled or connected the controller.

A touch screen display includes a display, a touch-sensitive overlay disposed on the display, a controller operably coupled to the touch-sensitive overlay, and a capacitive force sensor including first and second electrodes separated by a dielectric adhesive adhering the display to the touch-sensitive overlay.

A portable electronic device includes a housing and a touch screen display that includes a display, a touch-sensitive overlay disposed on the display, a controller operably coupled to the touch-sensitive overlay, and a capacitive force sensor including first and second electrodes separated by a dielectric adhesive adhering the display to the touch-sensitive overlay.

A touch screen display includes a display, a touch-sensitive overlay disposed on the display, a controller operably coupled to the touch-sensitive overlay,and a capacitive force sensor comprising first and second electrodes separated by a dielectric adhesive adhering the display to the touch-sensitive overlay, wherein the first electrode is operably coupled or connected to the controller.

A capacitive force sensor is included in the touch screen display. The touch screen display may be used to determine the occurrence of a touch on the touch screen display while the force sensor may be used to distinguish, for example, an inadvertent touch from a push selection of a feature on the display. An electronic device, including the touch screen display, may be configured to provide tactile feedback when a threshold force, or pressure is exceeded. The force sensor includes electrodes and one of the electrodes may be coupled or connected to the same controller that is coupled or connected to the capacitive touch-sensing layers of the touch-sensitive overlay. Therefore, a single controller may be used for both capacitive force sensing and for sensing a touch on the touch-sensitive overlay. The use of a single controller permits synchronization of sensing of a touch and sensing of force of the touch using, for, example, software to synchronize the sensing. Therefore, when a touch is detected, a force may be detected at the same time.

Further, the bezel of the display may be used as one of the electrodes for the capacitive touch sensing, thereby using features already present in the capacitive touch-sensitive overlay. Other electrodes may be deposited on the back side of the touch-sensitive overlay, providing thin electrodes that may be patterned in any appropriate configuration such as with four electrically isolated conductors, one at each corner of the touch-sensitive overlay. The conductors may be separated from the bezel by the adhesive that joins the touch-sensitive overlay to the display. Thus, a dielectric adhesive is used.

While the embodiments described herein are directed to particular implementations of the portable electronic device and the method of controlling the portable electronic device, modifications and variations may occur to those skilled in the art. All such modifications and variations are believed to be within the sphere and scope of the present disclosure. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A touch screen display comprising:
a display;
a touch-sensitive overlay disposed on the display;
a controller operably coupled to the touch-sensitive overlay;
a capacitive force sensor comprising first and second electrodes separated by a dielectric, wherein the first electrode is operably coupled to the controller.

2. The touch screen display according to claim 1, wherein the second electrode comprises a bezel arranged to protect the display.

3. The touch screen display according to claim 1, wherein the dielectric comprises an adhesive between the capacitive touch-sensitive overlay and the display.

4. The touch screen display according to claim 4, wherein the first electrode comprises a conductive layer between the adhesive and the touch-sensitive overlay.

5. The touch screen display according to claim 1, wherein the first electrode comprises a conductive layer deposited on the touch-sensitive overlay.

6. The touch screen display according to claim 1, wherein the first electrode comprises a plurality of electrically isolated conductors, wherein each of the conductors is electrically coupled to the controller.

7. The touch screen display according to claim 1, wherein the first electrode comprises four electrically isolated conductors, each of the conductors disposed near a respective corner of the capacitive touch-sensitive overlay.

8. A portable electronic device comprising a housing, and the touch screen display according to claim 1.

9. A touch screen display comprising:
a display;
a capacitive touch-sensitive overlay disposed on the display;
a controller, operably coupled to the capacitive touch-sensitive overlay;
a capacitive force sensor comprising first and second electrodes separated by a dielectric adhesive adhering the display to the touch-sensitive overlay.

10. The touch screen display according to claim 9, wherein the second electrode comprises a bezel arranged to protect the display

11. The touch screen display according to claim 9, wherein the first electrode comprises a conductive layer between the adhesive and the touch-sensitive overlay.

12. The touch screen display according to claim 9, wherein the first electrode comprises a conductive layer deposited on the touch-sensitive overlay.

13. The touch screen display according to claim 9, wherein the first electrode comprises a plurality of electrically isolated conductors.

14. The touch screen display according to claim 9, wherein an electrically isolated conductor is disposed in each corner of the capacitive touch-sensitive display, and wherein the electrode is comprised of the electrically isolated conductors.

15. A portable electronic device comprising a housing, and the touch screen display according to claim 9.
